# EUROPEAN PATENT SPECIFICATION

(11) **EP 1 099 379 B1**
(45) Date of publication and mention of the grant of the patent: **16.06.2004**
(21) Application number: 01200536.9
(22) Date of filing: 12.11.1997
(51) Int. Cl.: A21C 11/04

(54) **A device for shaping portions of bread dough or the like**
Vorrichtung zum Formen von Brotteigstücken oder dergleichen
Appareil pour la mise en forme de morceaux de pâte à pain ou similaire

(30) Priority: 12.11.1996 IT MI962348; 16.05.1997 IT MI971158
(43) Date of publication of application: 16.05.2001
(62) Divisional of application: 97203516.6
(73) Proprietor: Italiana Agro Alimentare S.r.l., 27029 Vigevano (Pavia) (IT)
(72) Inventor: Sigoni, Riccardo, 27029 Vigevano (Pavia) (IT); Varvello, Franco, 27029 Vigevano (Pavia) (IT); Rosso, Marco, 17026 Noli (Savona) (IT)
(74) Representative: Long, Giorgio

(56) References cited:
- WO-A-97/31539
- DE-A- 2 831 195
- FR-A- 781 702
- GB-A- 1 084 637
- US-A- 2 818 645
- US-A- 2 837 043
- US-A- 3 417 713
- US-A- 3 936 255
- US-A- 3 994 652
- US-A- 4 789 555
- US-A- 5 549 467

## Description

The present invention relates in general to a device for shaping portions of bread dough.

In the field of the production of bread and similar baked products it is known to shape portions of bread dough into suitable substantially flat loaves so that the loaf can easily be divided into separate bread rolls.

The shaping is generally performed by the baker who imparts to the prepared bread dough lines of weakening which facilitate its division into portions once the loaf is baked.

However, the shaping operation by the baker is somewhat lengthy and tedious and gives the loaves an artificial appearance which is not pleasing to final purchasers who prefer to buy small bread rolls.

A recognized requirement in the field of the shaping of portions of bread dough is that of simplifying and speeding up operations to shape bread dough and, at the same time, producing loaves which can easily be divided into separate bread rolls having a certain regularity of shape.

US patent no. 2,818,645 relates to a manually usable handle-equipped implement for imprinting and cutting a sheet or equivalent batch of dough. More specifically, the above patent discloses a horizontally elongate roller which has axially aligned freely rotable hand-grips or handles at its ends, the roller itself being in the form of a hollow cylinder having closed ends and having its peripheral surface of cellular form, the cells defining rows of what may be called pockets, each pocket, in turn, having a main outer portion and a central inner portion with said portions cooperating in cutting dough in a manner which is utilized, primarily, in preparing so-called square doughnuts.

U.S. patent no. 3,536,014 discloses an attachment for a dough forming machine of the type which forms dough into small disc or ball-like masses which, upon subsequent baking, are formed into rolls, hamburger buns or the like. The attachment is in the nature of a scoring or imprinting device for disfiguring the wads of dough such that, upon subsequent baking, the resultant bakery product will bear a distinct design on the upper and lower surfaces thereof.

U.S. patent no. 5,549,467 discloses an apparatus that forms flat thin ellipses of dough from a batch of dough, the apparatus including a housing that supports a conveyor, a press and a cutter. The cutter includes an elliptically shaped cutting edge so that, as a flat thin sheet of dough passes underneath the cutter, the cutter cuts ellipses of dough for delivery to a baking device.

US patent no. 4,789,555 discloses an apparatus and a method for preparing a patterned baked good by cutting a dough piece and impressing a pattern on the dough piece.

WO 97/31539 discloses a method of baking bread from dough including the steps of preparing the dough, rolling out the dough into a flat strip cutting the strip of dough into pieces and baking the flat pieces of dough in an oven to a temperature of 250-270°C. This documents also discloses a roller for use with the method for cutting the dough.

U.S. patent no. 3,936,255 discloses an automatic and continuous dough processing apparatus for embossing designs into wads of dough formed in predetermined masses. By utilizing the embossing principle of this invention, hand braided bread loaves may be manufactured in an automatic and continuous fashion with much less time spent in preparing each loaf.

The object of the present invention is to propose a shaping device which satisfies the aforementioned requirement.

This object is achieved by a device for shaping portion of the bread dough comprising a roller having opposed side handles, a substantially central body, a plurality of discs projecting from the central body and extending around its periphery, and shaping elements projecting from the central body, the central body of the roller having a polygonal cross-section and the shaping elements comprising a plurality of moulds projecting from the central body, wherein the discs have a series of through-holes and each mould has a through-hole for preventing the establishment, during the shaping of the dough, of a vacuum.

Preferably, the side handles of the roller are rotatable relative to the central body and the moulds are arranged in uniformly-spaced annular series and in a manner such that, in each series, a respective mould projects from each face of the central body.

The moulds are preferably hollow and have a pattern with a substantially closed profile.

According to a further embodiment of the device according to the invention, the shaping elements comprise a plurality of annular moulds projecting from the central body and a plurality of walls disposed annularly, alternating with the moulds, and projecting from the body.

Further characteristics and advantages of the shaping device according to the invention will become clear from the description of a preferred embodiment, from the description of apparatus incorporating the device, and from the description of the shaping of a portion of bread dough with the device of the invention, the descriptions being given by way of non-limiting example, with reference to the appended drawings, in which:
Figure 1 is a perspective view of a device for shaping bread dough according to the invention,
Figure 2 is a perspective view of a tool for cutting bread dough, for association with the shaping device of Figure 1,
Figure 3 shows schematically the use of the device of Figure 1 and of the cutting tool of Figure 2 for shaping bread dough,
Figure 4 is a perspective view of the bread produced by the shaping of the dough in the manner shown in Figure 3,
Figure 5 is a partially sectioned perspective view of apparatus for shaping portions of bread sough, incorporating a device for shaping bread dough.

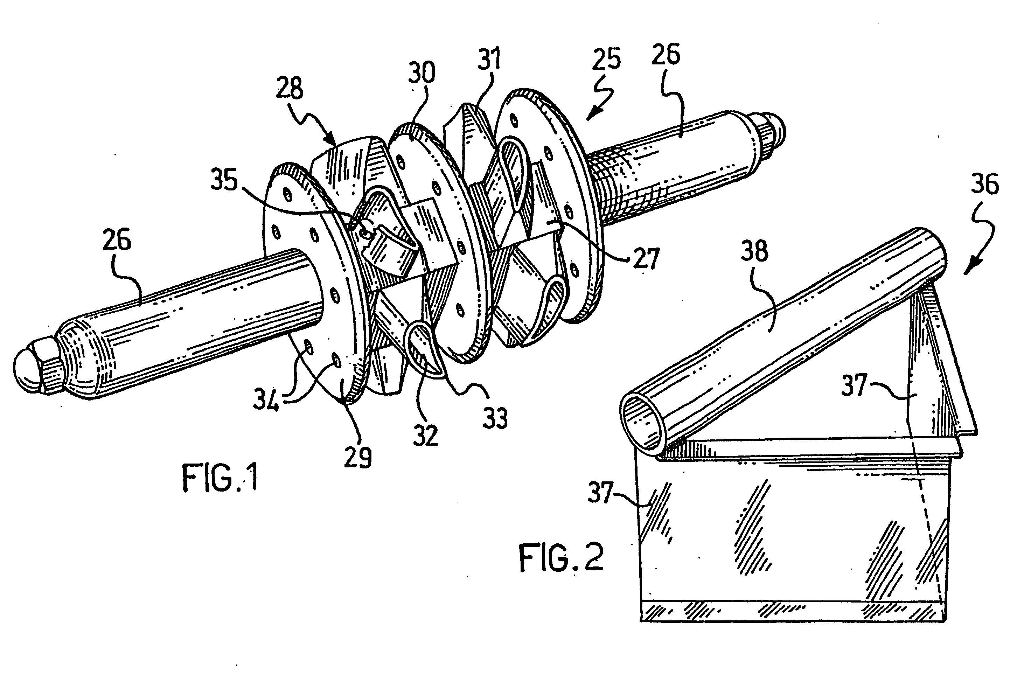

With reference now to Figures 1-4, Figure 1 shows a device for shaping bread dough according to the invention constituted by a roller, generally indicated 25.

The roller is shaped substantially like a rolling pin and has two opposed side handles 26 and a central body 27 with a pentagonal cross-section.

The handles 26 and the central body 27 define an axis of rotation of the roller 25.

The handles 26 are rotatable relative to the central body 27.

On the central body 27 there is a series of shaping elements, generally indicated 28, and discs 29 which are intended to cut into a portion of bread dough in order to confer respective predetermined patterns and lines of weakening on the resulting loaf after the dough has been cut and the individual pieces baked.

The central body 27, the elements 28, and the discs 29 are made of plastics material suitable for contact with foods.

Each disc 29 lies in a plane perpendicular to the axis of rotation of the roller, the discs being spaced apart uniformly and each having an outer cutting edge 30 which lies on a cylindrical surface coaxial with the central body 27.

The shaping elements 28 comprise moulds 31 disposed in uniformly-spaced annular series.

The moulds 31 have a substantially drop-like pattern and, in particular, each series of moulds 31 is disposed between two consecutive discs 29.

Moreover, each mould 31 has a cavity 32 and an edge 33 which projects relative to the cylindrical surface defined by edges 30 of the discs 29.

Both the edges 30 of the discs 29 and the edges 33 of the moulds 31 are blade-shaped and define the lines of weakening 39 and the drop-like shapes 40 of the dough, generally indicated 1 in Figure 6.

The discs 29 have a series of through-holes 34 and each mould 31 has a through-hole 35 for preventing the establishment, during the shaping of the dough, of a vacuum which would cause the dough to adhere strongly to the walls of the roller without being detached therefrom after shaping.

Figure 2 shows a preferred tool, generally indicated 36, for cutting portions of bread dough, for association with the shaping device illustrated in Figure 1.

The cutting tool comprises two thin, flat cutting walls 37, preferably made of metal, joined in a V-shape at one side, and a hollow tubular metal handle 38 arranged transverse the metal walls, joining the free ends of the walls 37, and welded thereto.

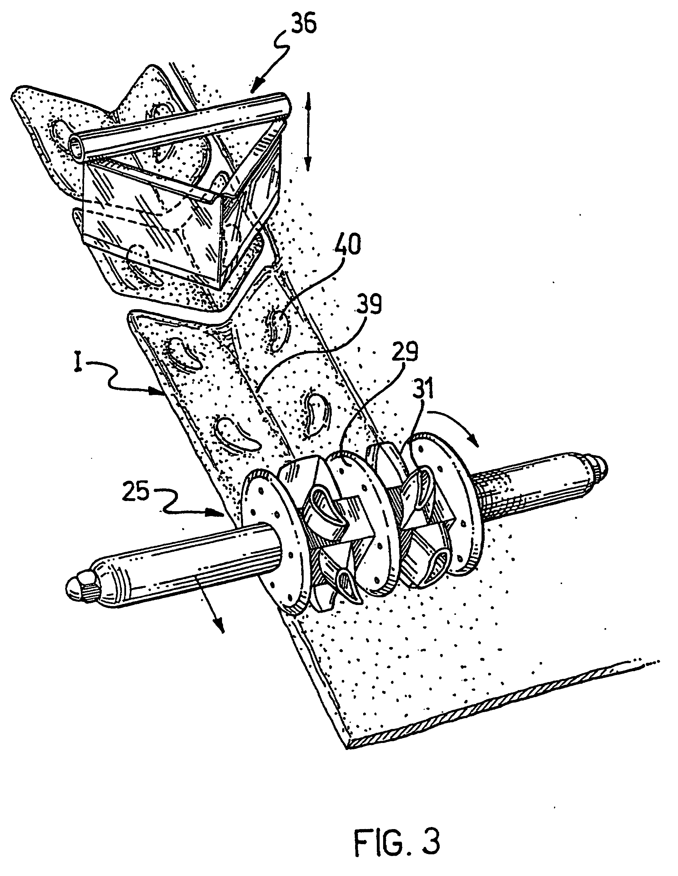

Figure 3 shows the application of the device of Figure 1 and of the cutting tool of Figure 2 for the shaping of bread dough to produce a "V"-shaped loaf which can be divided into portions and which has predetermined impressed patterns.

In this application, the user arranges a strip of bread dough on a work surface.

He then applies the rolling-pin-like roller 25 with a certain pressure such as not to cause pieces of dough to be separated and rotates it, moving it over the dough, for example, as indicated by the arrows.

Owing to the shape of the moulds 31, the dough is cut but is also stretched torsionally.

This deformation is taken up resiliently by the dough but can confer a rustic and home-made appearance on the finished bread; the presence of impressed patterns also gives it a novel appearance.

Moreover, the discs 29 confer on the dough lines of weakening 39 which enable the finished bread to be divided easily into portions.

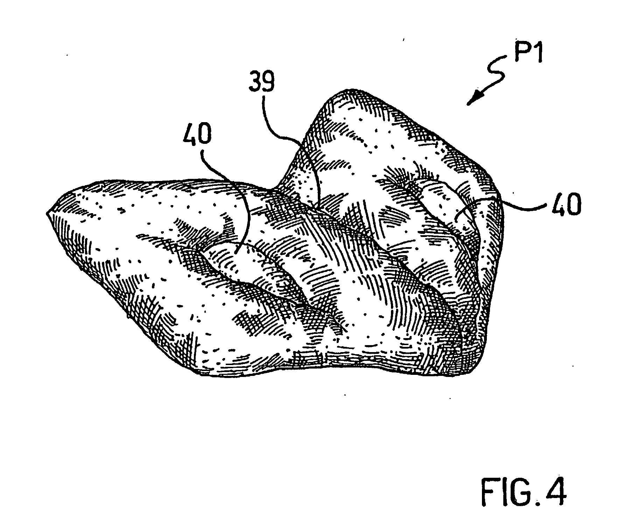

The dough thus formed is then cut with the cutting tool 36 so as to produce the loaf shown in Figure 4, once the dough is baked.

This loaf, generally indicated P1, is "V"-shaped and is characterized by a line of weakening 39 which enables it to be divided easily into portions, and by two drop-shaped impressions 40.

It has a pleasing rustic and home-made appearance and is also novel by virtue of the presence of the aforesaid drop-shaped impressions 40 which render it particularly attractive to the final consumer.

Naturally, an expert in the art may apply suitable modifications to the shaping device described in Figure 1 and, for example, may introduce "V"-shaped walls projecting from the central body of the roller, arranged annularly, and alternating with the moulds in order to incise or cut the bread dough during shaping.

The shaping device described above can advantageously be used in automatic dough-shaping apparatus.

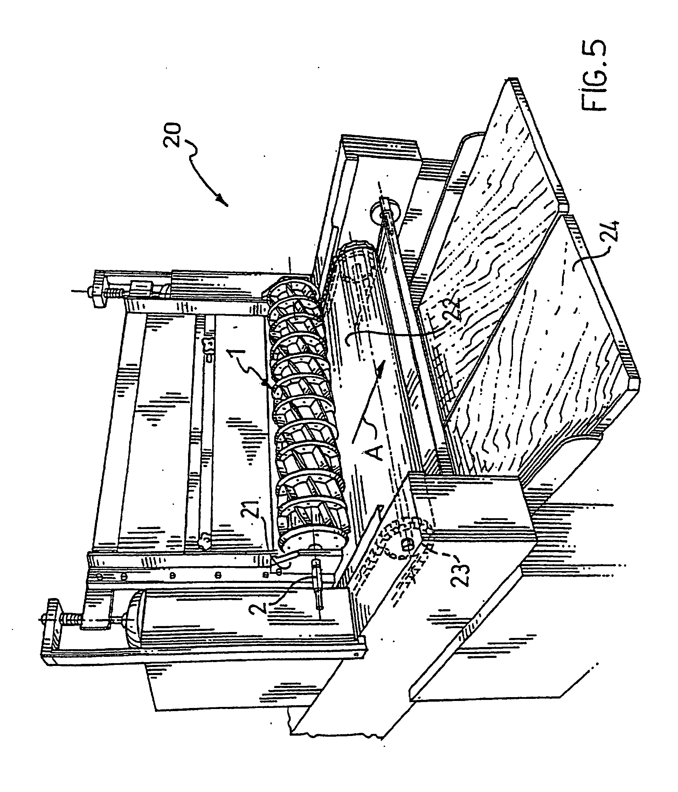

Apparatus of the type specified is generally indicated 20 in Figure 5. It has a support frame 21 and a substantially horizontal conveyor belt 22 extending between rollers 23, at least one of which is driven.

The belt 22 is intended to support portions of bread dough and defines a movable conveyor surface which has a direction of movement A. The movable surface follows a path extending between a kneading station, not shown and of conventional type, in which the dough is deposited on the belt 22, and a collecting board 24 used for passing the shaped portions of dough into an oven.

The apparatus 20 according to the invention comprises, above the above-defined movable surface, a roller 1.

It is to be noted that in the following description of the apparatus 20, the roller 1 of figure 5 represents an embodiment which is not an object of the present invention. However, the roller 1 can be substituted by the roller 25 of the present invention to be applied to and to function in the apparatus 20 in an analogous manner.

The shaping roller 1 is freely rotatable on its handles 2 which act as pins. They are engaged on the frame 21 at the sides of the belt 22. The roller 1 is substantially parallel to the movable surface and substantially perpendicular to the direction A, and the cylindrical surface defined by the edges 6, 10 of the discs 5 and of the walls 7 is disposed at a predetermined distance from the movable conveyor surface such that the portions of bread dough interfere with the roller 1 whilst being supported on the movable conveyor surface.

In fact, once the portions of dough have been deposited on the belt 22, they are pushed against the roller 1. At this point, the portions of dough cause the roller 1 to rotate, shaping the portions of dough which come out from beneath the roller 1 and are collected on the board 24.

In addition to the advantage mentioned above, the shaping device according to the invention produces loaves which can be divided up easily and at low cost.

Moreover, although the loaves thus formed have a certain firmness, once divided into portions, they form individual bread rolls which have a certain regularity of shape and a pleasing appearance.

In order to satisfy further and contingent requirements, an expert in the art may apply to the above-described shaping devices, apparatus and shaping method many further modifications and variations all of which, however, fall within the scope of protection of the present invention as defined in the appended claims.

## Claims

1. A device for shaping portions of bread dough or the like, comprising a roller (25) having opposed side handles (26), a substantially central body (27), a plurality of discs (29) projecting from the central body (27) and extending around its periphery, and shaping elements (28) projecting from the central body (27) the central body (27) having a polygonal cross-section and the elements (28) comprising a plurality of moulds (31) projecting therefrom, wherein the discs (29) have a series of through-holes (34) and each mould (31) has a through-hole (35) for preventing the establishment, during the shaping of the dough, of a vacuum.

2. A shaping device according to Claim 1, in which the side handles (26) are rotatable relative to the central body (27).

3. A shaping device according to Claim 1 or Claim 2, in which the discs (29) are perpendicular and spaced apart uniformly relative to the central body (27) and the moulds (31) are arranged in uniformly-spaced annular series.

4. A shaping device according to any one of Claims 1 to 3, in which each series of moulds (31) is arranged in a manner such that a respective mould projects from each face of the central body (27).

5. A shaping device according to any one of Claims 1 to 4, in which the discs (29) and the moulds (31) have respective blade-shaped edges (30) and (33) facing away from the central body (27).

6. A shaping device according to Claim 5, in which the edges (30) of the discs (29) lie on a single cylindrical surface coaxial with the central body (27) and the edges (33) of the moulds (31) project relative to the said cylindrical surface.

7. A shaping device according to any one of Claims 1 to 6, in which each mould (31) has a substantially closed profile with a cavity (32).

8. A shaping device according to Claim 1, in which the projecting shaping elements comprise a plurality of annular moulds projecting from the central body (27) and a plurality of walls disposed annularly, alternating with the moulds, and projecting from the body.

9. Apparatus (20) for shaping portions of bread dough, comprising the shaping device according to Claim 1 or Claim 6, a support frame (21) and a conveyor belt (22) extending between rollers (23) and defining a movable conveyor surface for supporting portions of bread dough and defining a direction of movement (A), in which a shaping roller (25) disposed above the movable surface is freely rotatable on the said handles (26) which are formed as pins and bear on the frame (21) at the sides of the belt (22) substantially parallel to the movable surface, the cylindrical surface being disposed at a predetermined distance from the movable conveyor surface such that the portions of bread dough interfere with the roller (25) whilst they are supported on the movable conveyor surface.

10. Apparatus (20) according to Claim 9, in which the shaping roller (25) is arranged so as to be substantially perpendicular to the direction of movement (A) of the movable conveyor surface.

11. A method of shaping a portion of bread dough in order to produce a shaped loaf of bread which can be divided into portions and has various impressed patterns, the method being **characterized in that** it comprises the steps of:
1) providing the device of preceding claims 1 to 8,
2) rolling a portion of bread dough with the shaping roller (25) with a pressure such as to impress lines of weakening and predetermined patterns in the dough,
3) cutting the dough to produce bread shapes.

12. A method of shaping a portion of bread dough according to claim 11, wherein the cutting step is carried out by a cutting tool which comprises one or more cutting walls and a handle.

13. A method of shaping a portion of bread dough according to Claim 12, wherein said cutting tool comprises two thin, flat cutting walls (37) joined in a V-shape at one side, and a tubular handle (38) arranged transverse the walls and joining the free ends of the cutting walls (37).

## Patentansprüche

1. Vorrichtung zum Formen von Portionen von Brotteig oder dergleichen, mit einer Walze (25) mit Handhaben (26) auf gegenüberliegenden Seiten, einem im wesentlichen mittigen Körper (27), einer Mehrzahl von Scheiben (29), die von dem mittigen Körper (27) abstehen und sich umfangsmäßig um ihn herum erstrecken, sowie Formgebungselementen (28), die von dem mittigen Körper (27) abstehen, wobei der mittige Körper (27) einen polygonalen Querschnitt besitzt und die Elemente (28) eine Mehrzahl von ihnen abstehender Formen (31) aufweisen, wobei die Scheiben (29) eine Reihe von Durchgangsöffnungen (34) aufweisen und jede Form (31) eine Durchgangsöffnung (35) zum Vermeiden der Entstehung eines Vakuums während des Formens des Teiges aufweist.

2. Formvorrichtung nach Anspruch 1, bei der die seitlichen Handhaben (26) in bezug auf den mittigen Körper (27) drehbar sind.

3. Formvorrichtung nach Anspruch 1 oder 2, bei der die Scheiben (29) bezüglich des mittigen Körpers (27) senkrecht und gleichförmig beabstandet sind, und die Formen (31) in gleichförmig beabstandeten ringförmigen Reihen angeordnet sind.

4. Formvorrichtung nach einem der Ansprüche 1 bis 3, bei der jede Reihe von Formen (31) derart angeordnet ist, daß jeweils eine Form von jeder Fläche des mittigen Körpers (27) absteht.

5. Formvorrichtung nach einem der Ansprüche 1 bis 4, bei der die Scheiben (29) und die Formen (31) jeweils klingenartige Kanten (30) und (33) besitzen, die von dem mittigen Körper (27) wegweisen.

6. Formvorrichtung nach Anspruch 5, bei der die Kanten (30) der Scheiben (29) auf einer einzigen, mit dem mittigen Körper (27) koaxialen zylindrischen Fläche liegen, und die Kanten (33) der Formen (31) relativ zu der zylindrischen Fläche abstehen.

7. Formvorrichtung nach einem der Ansprüche 1 bis 6, bei der jede Form (31) ein im wesentlichen geschlossenes Profil mit einem Hohlraum (32) aufweist.

8. Formvorrichtung nach Anspruch 1, bei der die abstehenden Formgebungselemente eine Mehrzahl von ringförmigen Formen aufweisen, die von dem mittigen Körper (27) abstehen, sowie eine Mehrzahl von ringförmig angeordneten Wänden, die mit den Formen abwechseln und vom Körper abstehen.

9. Maschine (20) zum Formen von Portionen von Brotteig, welche die Formvorrichtung nach Anspruch 1 oder 6 aufweist, einen Tragrahmen (21) und ein Förderband (22), das sich zwischen Rollen (23) erstreckt und eine bewegliche Förderorganoberfläche zum Tragen von Portionen von Brotteig begrenzt und eine Bewegungsrichtung (A) bestimmt, bei der eine über der beweglichen Oberfläche angeordnete Formwalze (25) an den Handhaben (26) frei drehbar ist, die als Stifte ausgebildet sind und auf dem Rahmen (21) zu beiden Seiten des Bandes (22) im wesentlichen parallel zu der beweglichen Oberfläche gelagert sind, wobei die zylindrische Fläche in einem vorgegebenen Abstand von der beweglichen Förderorganoberfläche angeordnet ist, so daß die Portionen von Brotteig mit der Walze (25) in Eingriff geraten, während sie auf der beweglichen Förderorganoberfläche getragen sind.

10. Vorrichtung (20) nach Anspruch 9, bei der die Formwalze (25) derart angeordnet ist, daß sie im wesentlichen senkrecht zu der Bewegungsrichtung (A) der beweglichen Förderorganoberfläche ist.

11. Verfahren zum Formen einer Portion Brotteig zum Erzeugen eines geformten Brotlaibes, der in Portionen zerteilt werden kann und verschiedene eingedrückte Muster aufweist, wobei das Verfahren **dadurch gekennzeichnet ist, daß** es die folgenden Schritte aufweist:
1) Zurverfügungstellen der Vorrichtung der vorangegangenen Ansprüche 1 bis 8,
2) Walzen einer Portion Brotteig mit der Formwalze (25) mit einem solchen Druck, daß Schwächungslinien und vorgegebene Muster in den Teig eingedrückt werden,
3) Schneiden des Teiges zum Erzeugen von Brotformen.

12. Verfahren zum Formen einer Portion Brotteig gemäß Anspruch 11, bei dem der Schneideschritt mit Hilfe eines Schneidwerkzeugs durchgeführt wird, das eine oder mehrere Schneidewände und eine Handhabe aufweist.

13. Verfahren zum Formen einer Portion Brotteig gemäß Anspruch 12, bei dem das Schneidwerkzeug zwei dünne, ebene Schneidwände (37) aufweist, die auf einer Seite zu einer V-Form zusammengefügt sind, sowie eine rohrförmige Handhabe (38), die in Querrichtung zu den Wänden angeordnet ist und sich an die freien Enden der Schneidwände (37) anschließt.

## Revendications

1. Dispositif destiné à mettre en forme des portions de pâte à pain ou autre, comprenant un rouleau (25) comportant des poignées latérales opposées (26), un corps pratiquement central (27), une pluralité de disques. (29) dépassant du corps central (27) et s'étendant autour de sa périphérie, et des éléments de mise en forme (28) dépassant du corps central (27), le corps central (27) ayant une section transversale polygonale et les éléments (28) comprenant une pluralité de moules (31) dépassant de ceux-ci, où les disques (29) comportent une série de trous traversants (34) et chaque moule (31) comporte un trou traversant (35) destiné à empêcher la formation d'un vide pendant la mise en forme de la pâte.

2. Dispositif de mise en forme selon la revendication 1, dans lequel les poignées latérales (26) peuvent tourner par rapport au corps central (27).

3. Dispositif de mise en forme selon la revendication 1 ou la revendication 2, dans lequel les disques (29) sont perpendiculaires et espacés uniformément par rapport au corps central (27) et les moules (31) sont disposés suivant une série annulaire uniformément espacée.

4. Dispositif de mise en forme selon l'une quelconque des revendications 1 à 3, dans lequel chaque série de moules (31) est agencée d'une manière telle qu'un moule respectif dépasse de chaque face du corps central (27).

5. Dispositif de mise en forme selon l'une quelconque des revendications 1 à 4, dans lequel les disques (29) et les moules (31) comportent des bords en forme de lame respectifs (30) et (33) tournés à l'opposé du corps central (27).

6. Dispositif de mise en forme selon la revendication 5, dans lequel les bords (30) des disques (29) sont situés sur une seule surface cylindrique coaxiale avec le corps central (27) et les bords (33) des moules (31) dépassent par rapport à ladite surface cylindrique.

7. Dispositif de mise en forme selon l'une quelconque des revendications 1 à 6, dans lequel chaque moule (31) présente un profil pratiquement fermé avec une cavité (32).

8. Dispositif de mise en forme selon la revendication 1, dans lequel les éléments de mise en forme qui dépassent comprennent une pluralité de moules annulaires dépassant du corps central (27) et une pluralité de parois disposées suivant un anneau, alternant avec les moules, et dépassant du corps.

9. Dispositif (20) destiné à mettre en forme des portions de pâte à pain, comprenant le dispositif de mise en forme selon la revendication 1 ou la revendication 6, un châssis de support (21) et une courroie de transporteur (22) s'étendant entre des rouleaux (23) et définissant une surface mobile de transporteur destinée à supporter des parties de pâte à pain et à définir une direction de mouvement (A), dans lequel un rouleau de mise en forme (25) disposé au-dessus de la surface mobile peut tourner librement sur lesdites poignées (26) qui sont formées sous forme de broches et portent sur le châssis (21) au niveau des côtés de la courroie (22) pratiquement parallèlement à la surface mobile, la surface cylindrique étant disposée à une distance prédéterminée par rapport à la surface mobile du transporteur de manière à ce que les portions de pâte à pain interfèrent avec le rouleau (25) alors qu'elles sont supportées sur la surface mobile du transporteur.

10. Dispositif (20) selon la revendication 9, dans lequel le rouleau de mise en forme (25) est agencé de façon à être pratiquement perpendiculaire à la direction de mouvement (A) de la surface mobile du transporteur.

11. Procédé de mise en forme d'une portion de pâte à pain pour pouvoir produire une miche de pain mise en forme qui peut être divisée en portions et présente divers motifs appliqués, le procédé étant **caractérisé en ce qu'**il comprend les étapes consistant à :
1) fournir le dispositif selon les revendications précédentes 1 à 8,
2) rouler une portion de la pâte à pain avec le rouleau de mise en forme (25) avec une pression telle qu'elle applique des lignes d'affaiblissement et des motifs prédéterminés dans la pâté,
3) couper la pâte pour produire des formes de pains.

12. Procédé de mise en forme d'une portion de pâte à pain selon la revendication 11, dans lequel l'étape de coupe est exécutée par un outil de coupe qui comprend une ou plusieurs parois de coupe et une poignée.

13. Procédé de mise en forme d'une portion de pâte à pain selon la revendication 12, dans lequel ledit outil de coupe comprend deux minces parois de coupe plates (37) jointes en une forme de V d'un côté, et une poignée tubulaire (38) disposée transversalement aux parois et joignant les extrémités libres des parois de coupe (37).
